(19) Europäisches Patentamt

European Patent Office

Office européen des brevets

(11) **EP 2 747 421 B1**

(12) **FASCICULE DE BREVET EUROPEEN**

(45) Date de publication et mention
de la délivrance du brevet:
**02.12.2015 Bulletin 2015/49**

(51) Int Cl.:
***H04N 5/33*** *(2006.01)*      ***G01B 9/02*** *(2006.01)*

(21) Numéro de dépôt: **13195945.4**

(22) Date de dépôt: **05.12.2013**

(54) **Procede et dispositif de correction de reponse spatiale pour spectrometres a transformee de fourier imageurs**

Verfahren und Vorrichtung zur Korrektur der Raumantwort für Fourier-Transformations-Spektrometer

Method and device for correcting a spatial response for Fourier-transform spectrometers

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.12.2012 FR 1203559**

(43) Date de publication de la demande:
**25.06.2014 Bulletin 2014/26**

(73) Titulaires:
• **Thales
92200 Neuilly Sur Seine (FR)**
• **CENTRE NATIONAL D'ETUDES SPATIALES
75001 Paris (FR)**

(72) Inventeurs:
• **Gaucel, Jean-Michel
06150 Cannes-La-Bocca (FR)**
• **Israbian, Claude
06150 Cannes-La-Bocca (FR)**
• **Simeoni, Denis
06150 Cannes-La-Bocca (FR)**

(74) Mandataire: **Nguyen, Dominique et al
Marks & Clerk France
Immeuble Visium
22, avenue Aristide Briand
94117 Arcueil Cedex (FR)**

(56) Documents cités:
**US-A- 5 675 513          US-A- 5 777 736
US-A1- 2007 075 888**

**Description**

La présente invention concerne un procédé et un dispositif de correction spatiale, notamment pour des dispositifs d'observation de la terre, et plus particulièrement des spectromètres à transformée de Fourier imageurs. De tels dispositifs peuvent notamment être utilisés dans des satellites météorologiques d'observation.

Un spectromètre à transformée de Fourier, communément désigné par le sigle « FTS » correspondant à la terminologie anglaise « Fourier Transform Spectrometer », est un instrument observant une scène avec une résolution spatiale - c'est-à-dire une taille de point de sondage - relativement basse et une résolution spectrale très fine, et est par conséquent typiquement couplé avec un dispositif dit « imageur », travaillant en bande large, dont la résolution spatiale est plus fine. Le couplage du FTS avec un imageur a pour but d'améliorer un alignement ou « registration » spatial de l'instrument FTS.

A titre d'exemple, dans un satellite d'observation météorologique, le spectromètre à transformée de Fourier permet d'observer le spectre de la lumière dans le domaine infrarouge / proche infrarouge, et sa résolution spatiale peut être de l'ordre de 10 à 20 kilomètres. Le spectromètre à transformée de Fourier est couplé avec un imageur de résolution plus fine, de l'ordre du kilomètre, permettant une meilleure analyse physique de la scène observée.

Des spectromètres à transformée de Fourier connus comprennent un détecteur analogique disposé dans un plan pupille. Des spectromètres à transformée de Fourier plus récents - appelés FTS imageurs - comprennent, en remplacement du détecteur analogique, un détecteur matriciel placé dans un plan image, comme décrit par exemple dans le document US 2007/0075888. La décomposition du champ d'un point de sondage-représentant la résolution finale de l'instrument - en pixels élémentaires permet notamment d'effectuer une compensation numérique de l'effet du champ ou « auto-apodisation », ou encore de disposer d'un mode image, c'est-à-dire d'un mode permettant d'imager le champ de vue d'un point de sondage avec une résolution spatiale fine. Ce mode image permet de remplacer l'imageur. Les pixels physiques formant une telle matrice sont typiquement réalisés par la technologie communément désignée par le sigle CMOS correspondant à la terminologie anglaise « Complementary Metal Oxide Semiconductor », ou la technologie CCD correspondant à la terminologie anglaise « Charge-Coupled Device ». Afin d'optimiser le rapport signal sur bruit, la lecture du détecteur s'effectue avec des résolutions spatiales variables suivant le mode. Pour la suite, le terme « macro-pixel » désigne la résolution « numérique » du spectromètre à transformée de Fourier, et le terme « super-pixel » désigne la résolution « numérique » du mode image. Un super-pixel peut être formé par un pixel physique de la matrice détecteur, ou bien par un groupement de pixels physique, par exemple de 2x2 ou 3x3 pixels, suivant le besoin de résolution spatiale requise pour le mode image. Un macro-pixel définit la résolution spatiale du mode interférogramme, et est en pratique formé par une pluralité de pixels physiques de la matrice détecteur, par exemple disposée suivant un alignement en une ou plusieurs lignes ou en une ou plusieurs colonnes de pixels physiques de la matrice détecteur, suivant la direction des franges interférométriques afin de conserver un bon niveau de contraste au sein de chaque macro-pixel.

Un inconvénient de tels spectromètres à transformée de Fourier est lié au fait que ceux-ci sont particulièrement sensibles aux non-uniformités de réponse dans le champ de vue. Les non-uniformités de réponse sont principalement dues au détecteur - appelé également PRNU, selon le sigle désignant la terminologie anglaise « Pixel Response Non Uniformity »- et aux optiques.

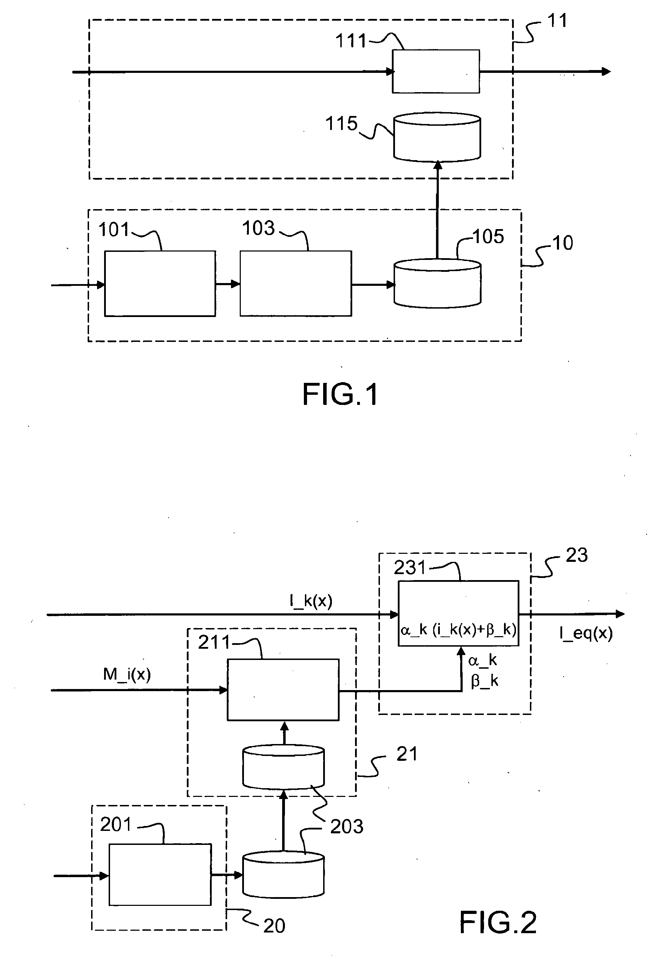

Selon une technique connue, il est possible de procéder à une égalisation des données interférométriques en moyenne sur le macro-pixel interférométrique. Cette technique est décrite en détails ci-après en référence à la figure 1. Cette technique est particulièrement adaptée à des scènes observées de nature homogène.

Un but de la présente invention est de pallier au moins les inconvénients précités, en proposant un dispositif et un procédé de correction spatiale pour dispositif tel qu'un spectromètre à transformée de Fourier imageur, s'appuyant avantageusement sur le mode de fonctionnement en tant qu'imageur à la résolution super-pixel de cet équipement.

A cet effet, la présente invention a pour objet un procédé de correction de réponse spatiale pour spectromètre à transformée de Fourier imageur ayant au moins un mode de fonctionnement dit mode interférométrique consistant à acquérir des interférogrammes, le mode interférométrique ayant une première résolution spatiale correspondant à la dimension d'un macro-pixel, un macro-pixel étant constitué de plusieurs pixels d'une matrice d'un détecteur placé dans un plan image, et un mode de fonctionnement dit mode image consistant à acquérir des images, le mode image ayant une deuxième résolution spatiale correspondant à la dimension d'un super-pixel, un super-pixel étant constitué d'au moins un pixel de la matrice du détecteur, le procédé comprenant au moins les étapes suivantes :

- une étape préalable de calcul des paramètres d'égalisation pour tous les super-pixels i comprenant un gain et un offset à partir de données acquises sur des scènes d'étalonnage,
- une étape de détermination de coefficients d'égalisation à un niveau dit pseudo super-pixel déterminant les gains et offsets au niveau du macro-pixel à partir d'une image acquise en mode image, et des gains et offsets déterminés à l'étape préalable,
- une étape d'égalisation au niveau pseudo super-pixel, appliquant les coefficients d'égalisation à un macro-pixel

**EP 2 747 421 B1**

d'une acquisition en mode interférogramme du spectromètre imageur pour restituer un interférogramme égalisé.

Dans un mode de réalisation de l'invention, les scènes d'étalonnage peuvent être spatialement uniformes.

Dans un mode de réalisation de l'invention, les scènes d'étalonnage peuvent être des scènes de types respectivement corps noir et espace froid.

Dans un mode de réalisation de l'invention, les coefficients d'égalisation peuvent être déterminés au moyen des relations (4) et (5) explicitées ci-après.

Dans un mode de réalisation de l'invention, ladite étape préalable peut être mise en oeuvre par des moyens disposés au sol, les étapes de détermination et d'égalisation pouvant être mises en oeuvre dans des moyens embarqués.

La présente invention a également pour objet un dispositif de correction de réponse spatiale pour spectromètre à transformée de Fourier imageur, configuré pour la mise en oeuvre d'un procédé selon l'un quelconque des modes de réalisation décrits ci-après, le dispositif de correction comprenant au moins un module de traitement de caractérisation au sol configuré pour la mise en oeuvre de ladite étape préalable et un module embarqué de traitement configuré pour la mise en oeuvre desdites étapes de détermination et d'égalisation.

D'autres caractéristiques et avantages de l'invention apparaîtront à la lecture de la description, donnée à titre d'exemple, faite en regard des dessins annexés qui représentent :

- la figure 1, un logigramme illustrant de manière synoptique un procédé connu de correction de réponse spatiale d'un spectromètre à transformée de Fourier ;
- la figure 2, un logigramme illustrant un procédé de correction de réponse spatiale d'un spectromètre de Fourier, selon un exemple de réalisation de la présente invention ;
- la figure 3, un schéma illustrant de manière synoptique un procédé de correction de réponse spatiale selon un exemple de réalisation de l'invention ;
- la figure 4, un diagramme temporel illustrant le fonctionnement d'un procédé ou un dispositif de correction selon un exemple de réalisation de l'invention.

La figure 1 présente un logigramme illustrant de manière synoptique un procédé connu de correction de réponse spatiale d'un spectromètre à transformée de Fourier.

Selon une technique connue d'égalisation d'un macro-pixel, illustrée par la figure 1, des coefficients d'égalisation peuvent être stockés dans une mémoire embarquée en tant que paramètres programmables en vol. Selon cette technique, même si la caractérisation au sol des coefficients d'égalisation est réalisée au niveau du super-pixel, les coefficients d'égalisation appliqués sont équivalents à une caractérisation qui serait faite au niveau du macro-pixel. Il s'agit là d'un inconvénient de la technique connue : l'égalisation est réalisée au niveau du macro-pixel, et n'utilise pas la caractérisation réalisée au niveau du super-pixel, ainsi que cela est le cas pour la présente invention.

Ainsi, en référence à la figure 1, un procédé d'égalisation peut comprendre une étape de calcul des coefficients d'égalisation au niveau super-pixel 101, c'est-à-dire du gain et de la déviation ou « offset » suivant le terminologie anglaise communément utilisée dans le domaine technique, au niveau super-pixel, et une étape de calcul des coefficients d'égalisation au niveau macro-pixel 103, ces coefficients étant calculés à partir de scènes d'étalonnage, par exemple des vues dites « BB » et « CS » correspondant respectivement à la terminologie anglaise « Black Body » ou corps noir, et « Cold Space » ou espace froid. Les coefficients ainsi déterminés peuvent être stockés dans une mémoire 105. Les deux étapes de calcul 101, 103 précitées peuvent être mises en oeuvre au sein d'un module de calcul 10 disposé au sol.

Les coefficients d'égalisation stockés dans la mémoire 105 peuvent être transmis à un module de calcul embarqué 11. Par exemple, les données stockées dans la mémoire 105 peuvent être téléchargées vers une mémoire embarquée 115 par des moyens appropriés de transfert de données. Le module de calcul embarqué 11 peut être configuré pour mettre en oeuvre une étape d'égalisation 111, appliquant les coefficients d'égalisation à chaque interférogramme acquis par le spectromètre à transformée de Fourier.

Selon la présente invention, il est proposé que des coefficients d'égalisation relatifs au super-pixel, notamment des coefficients d'offset et des coefficients de gain, soient stockés dans une mémoire embarquée. Alors, des moyens de calcul embarqués, plus précisément un module de traitement d'image, peuvent permettre le calcul quasiment en temps réel des coefficients d'offset et de gain du macro-pixel. A la différence des techniques connues précitées, il est proposé par la présente invention que les coefficients d'égalisation du macro-pixel soient déterminés à partir de l'image brute, telle qu'acquise par le spectromètre en mode imageur.

Pour chaque acquisition d'un interférogramme donné, les coefficients d'égalisation sont constants pour tous les échantillons de cet interférogramme. Ainsi un procédé selon la présente invention présente l'avantage de ne pas produire des artefacts spectraux.

Une spécificité de la présente invention réside dans le fait que les coefficients d'égalisation sont déterminés au niveau du super-pixel, l'égalisation étant appliquée au niveau du macro-pixel.

Maintenant en référence à la figure 2, un procédé de correction selon la présente invention peut comporter une étape préalable de calcul 201 des paramètres d'égalisation du super-pixel, soit un calcul de coefficients de gain et d'offset au niveau du super-pixel. L'étape préalable de calcul 201 peut être mise en oeuvre dans un module de traitement de caractérisation au sol 20.

L'étape préalable de calcul 201 constitue un traitement de caractérisation dit « hors-ligne », réalisé par des moyens physiquement disposés au sol. Ce traitement de caractérisation peut être réalisé de manière périodique suivant une fréquence déterminée.

Lors de l'étape préalable de calcul 201, le calcul des paramètres d'égalisation est réalisé à partir des données formant des scènes d'étalonnage, par exemple des scènes BB et CS. Pour la suite il est considéré que les scènes BB et CS sont spatialement uniformes. Il est également considéré que la matrice détecteur du spectromètre à transformée de Fourier est éclairée en totalité, ce qui suppose que le détecteur constitue le diaphragme de champ. Si tel n'est pas le cas, un procédé selon la présente invention peut avantageusement comprendre des moyens additionnels de compensation prévus à cet effet. Les paramètres calculés lors de l'étape préalable de calcul 201 peuvent être stockés dans une mémoire 203.

L'acquisition de l'image peut être réalisée avant ou après l'acquisition de l'interférogramme. Il est pour la suite considéré qu'un interférogramme peut être stocké dans une mémoire tampon avant son traitement.

Les données des scènes d'étalonnage BB et CS sont utilisées pour la détermination des gains $a_i$ et des offsets $b_i$ de tous les super-pixels i.

Une mesure se fonde sur une hypothèse de modèle linéaire de la forme : $M = aX + b$, où a et b sont respectivement les paramètres de gain et d'offset, M désignant un niveau de signal numérique, et X représente un niveau de luminance.

La vue BB permet le recueil d'un ensemble de données image $\{M_{BB_i}\}$ pour tous les super-pixels i d'un point de sondage donné.

D'une manière similaire, la vue CS permet le recueil d'un ensemble de données image $\{M_{CS_i}\}$ pour tous les super-pixels i d'un point de sondage donné.

Lors de l'étape préalable de calcul 201, pour tous les super-pixels i, des coefficients $\hat{a}_i$ et $\hat{b}_i$ peuvent être estimés respectivement suivant les relations suivantes :

$$\hat{b}_i = M_{CS_i} \qquad (1),$$

$$\hat{a}_i = \left(M_{BB_i} - M_{CS_i}\right) \times \sum_{\text{Superpixel } j \in \text{Point de sondage}} 1 \times \frac{1}{\sum_{\text{Superpixel } j \in \text{Point de sondage}} \left(M_{BB_i} - M_{CS_i}\right)} \qquad (2).$$

La relation (2) ci-dessus figure une somme et une normalisation à l'échelle d'un point de sondage.

Les paramètres calculés lors de l'étape préalable de calcul 201 et stockés dans la mémoire 203 peuvent être transmis vers un module embarqué de traitement 21 configuré pour mettre en oeuvre une étape de détermination 211 des coefficients d'égalisation à un niveau dit « pseudo-super pixel ». Le module embarqué de traitement 21 étant situé à bord du satellite, les données stockées dans la mémoire 203 peuvent être téléchargées vers une mémoire embarquée 213 par des moyens appropriés de transfert de données.

L'étape de détermination 211 permet de déterminer les gains et offsets au niveau du macro-pixel à partir des données d'une image brute recueillies par le spectromètre imageur en mode image, acquises sur la même scène que le mode interférométrique du spectromètre imageur, et des gains et offsets au niveau du super-pixel déterminés par l'étape préalable de calcul 201.

D'un point de vue opérationnel, les calculs réalisés lors de l'étape de détermination 211 peuvent se formuler de la manière suivante.

Soit un ensemble de données image $\{M_i\}$ pour tous les super-pixels i appartenant à un macro-pixel.

Soit également un ensemble de données interférométriques $\{I_k\}$ pour tous les macro-pixels k appartenant à un point de sondage.

Le gain recherché pour le macro-pixel est alors la solution d'équation exprimée par la relation suivante :

$$\hat{\alpha}_k \times \sum_{\text{Superpixel } i \in \text{MacroPixel} k} \left(M_i - \hat{b}_i\right) = \sum X_i \qquad (3),$$

soi:

4

$$\hat{\alpha}_k = \frac{\sum\limits_{Superpixel\, i\in MacroPixel k} \left(\dfrac{M_i - \hat{b}_i}{\hat{a}_i}\right)}{\sum\limits_{Superpixel\, i\in MacroPixel k} \left(M_i - \hat{b}_i\right)} \qquad (4).$$

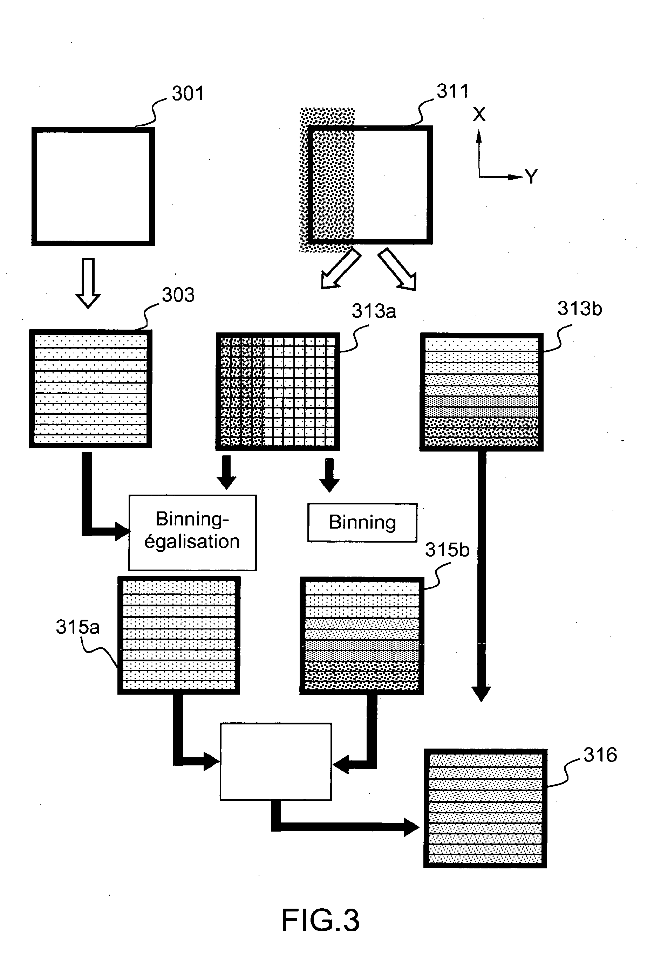

Les modalités pratiques d'évaluation des termes numérateur et dénominateur dans la relation (4) ci-dessus sont explicitées ci-après en référence à la figure 3.

L'offset recherché pour le macro-pixel peut se formuler suivant la relation suivante :

$$\hat{\beta}_k = \sum\limits_{Superpixel\, i\in MacroPixel\, k} \hat{b}_i \qquad (5).$$

Les paramètres de gain et d'offset ainsi déterminés à l'étape de détermination 211 peuvent alors être transmis à un module embarqué de traitement d'interférogramme 23, permettant la réalisation d'une étape d'égalisation 231 au niveau pseudo super-pixel. L'étape d'égalisation 231 applique les paramètres d'égalisation à un macro-pixel k d'une acquisition $I_k$ en mode interférogramme du spectromètre imageur pour restituer un interférogramme égalisé $I_{eq\_k}$, d'une manière formulée par les relations suivantes :

Pour chaque échantillon de paramètre x, désignant la différence de marche optique :

$$I_{eq\_k}(x) = \hat{\alpha}_k \times \left(I_k(x) + \beta_k\right) \qquad (6),$$

La relation (4) ci-dessus peut se reformuler de la manière suivante :

$$\hat{\alpha}_k = \frac{\sum\limits_{Superpixel\, i\in Macropixel\, k} \left(\hat{\alpha}_i \times M_i\right) + \hat{D}_k}{\sum\limits_{Superpixel\, i\in Macropixel\, k} \left(M_i\right) + \hat{\beta}_k} \qquad (7),$$

le terme $\hat{D}_k$ désignant la déviation pour le macro-pixel k, et se formulant suivant la relation suivante :

$$\hat{D}_k = \sum\limits_{Superpixel\, i\in Macropixel\, k} \frac{\hat{b}_i}{\hat{a}_i} \qquad (8).$$

Ainsi pour tout pixel i le gain d'égalisation du super-pixel s'écrit :

$$\hat{\alpha}_i = \frac{1}{\hat{a}_i} \qquad (9).$$

Pour chaque macro-pixel k l'offset et la déviation peuvent ainsi s'écrire :

$$\hat{\beta}_k = \sum\limits_{Superpixel\, i\in Macropixel\, k} b_i \qquad (5),$$

$$\hat{D}_k = \sum\limits_{Superpixel\, i\in Macropixel\, k} \frac{\hat{b}_i}{\hat{a}_i} \qquad (8).$$

Les coefficients $\hat{a}_i$ et $\hat{b}_i$ sont calculés lors de l'étape préalable de calcul 201 à partir des relations (1) et (2) ci-dessus.

Ces coefficients peuvent être pré-calculés dans le but de réduire la charge de travail du module de calcul embarqué.

Ainsi, la présente invention permet d'exploiter les données du mode imageur d'un spectromètre à transformée de Fourier imageur dans le but de corriger les non-uniformités au niveau du super-pixel.

Le procédé d'égalisation permet une égalisation "intra-échantillon" dont le but est de :

- égaliser les variations de réponse du détecteur ou PRNU et les variations de luminosité afin d'améliorer l'uniformité de la réponse de la fonction d'étalement du point de l'instrument, communément désignée par le sigle IPSF correspondant à la terminologie anglaise « Instrument Point Spread Function »,
- supprimer la ligne de base afin de supprimer l'effet de contraste ou « aliasing » suivant la terminologie anglaise, généré par la décimation de la fréquence zéro. Cet avantage est assuré par le fait que l'offset a un impact aux fréquences zéro, hors de la bande utile.

Dans la mesure où l'égalisation est destinée, notamment, à corriger un effet de non-uniformité propre au détecteur, celle-ci doit préférablement être réalisée après une possible correction de non-linéarité du détecteur. Un autre avantage de la présente invention est que le mode image du spectromètre imageur peut être utilisé de manière permanente de manière à autoriser une correction en temps réel.

La figure 3 présente un schéma illustrant de manière synoptique un procédé de correction de réponse spatiale selon un exemple de réalisation de l'invention, l'offset n'y étant pas considéré pour des raisons de clarté de l'exposé.

Au moins deux scènes d'étalonnage 301 supposées uniformes, une vue de type CS et une vue de type BB, permettent l'établissement d'une cartographie 303 du détecteur, comprenant les données de gain et d'offset $\hat{a}_i$ et $\hat{b}_i$ pour tous les super-pixels i du détecteur, ainsi que cela est décrit précédemment en référence à la figure 2, et plus précisément à l'étape préalable de calcul 201 en référence à la figure 2.

Une scène observée définit une vue de scène 311 par exemple en deux définitions et définie dans un repère cartésien selon des coordonnées (x, y). La scène donne lieu à l'acquisition d'une vue en mode image 313a notée $M_i$ dans les relations (3), (4) et (7) précédentes par le mode imageur du spectromètre à transformée de Fourier imageur, et d'une collection de vues en mode interférométrique 313b notées $I_k(x)$ dans la relation (6) précédente. Dans l'exemple non-limitatif de l'invention illustré par la figure 3, les macro-pixels sont formés par des regroupements de pixels par lignes, dans l'alignement des franges interférométriques non représentées sur la figure. Ils pourraient dans d'autres exemples de réalisation être formés par des regroupements de pixels par colonnes.

Le dénominateur dans la relation (4) ci-dessus, illustré par la référence 315a sur la figure, dans laquelle chaque ligne correspond à un macro-pixel k, est évalué par un regroupement de pixels, ou « binning » selon la terminologie anglaise, réalisé sur la vue en mode image 313a, après égalisation au moyen des paramètres d'égalisation d'offset contenus dans la cartographie 303 du détecteur.

Le numérateur dans la relation (4) ci-dessus, illustré par la référence 315b sur la figure, dans laquelle chaque ligne correspond à un macro-pixel k, est évalué par binning de la vue en mode image 313a, avantageusement après son égalisation au moyen des paramètres de gain et d'offset compris dans la cartographie 303. Une division terme à terme des termes numérateur et dénominateur dans la relation (4) permet d'obtenir les coefficients de gain $\hat{\alpha}_k$ d'égalisation du macro-pixel. L'application des coefficients de gain et d'offset du macro-pixel $\hat{\alpha}_k$, $\hat{\beta}_k$ selon la relation (7) formulée précédemment mène à une image égalisée selon le procédé de l'invention, illustrée par la référence 316 sur la figure.

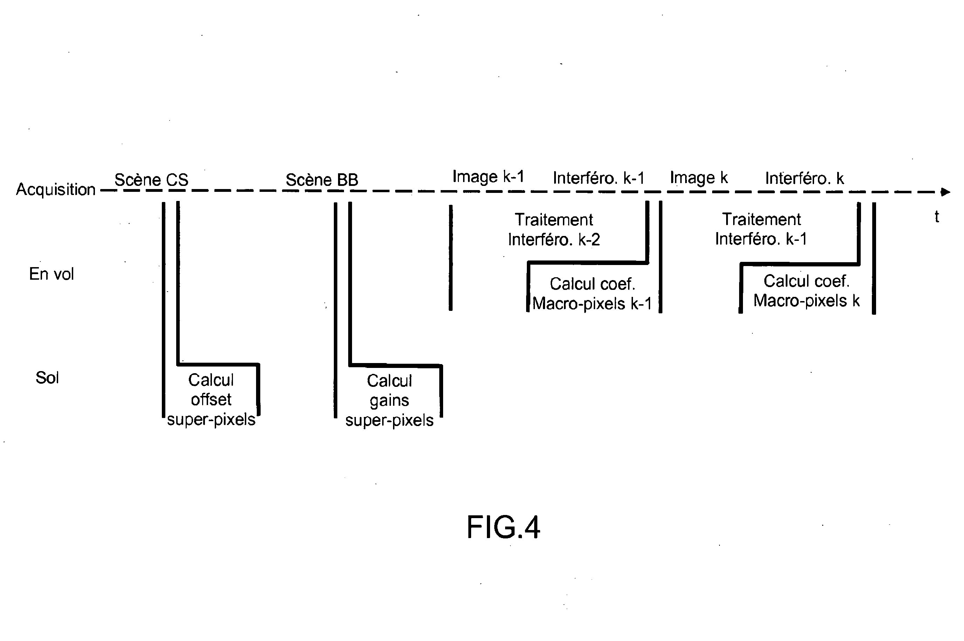

La figure 4 présente un diagramme temporel illustrant le fonctionnement d'un procédé ou un dispositif de correction selon un exemple de réalisation de l'invention. Dans un premier temps, au sol, en préparation au fonctionnement opérationnel, ou « commissionning » selon la terminologie anglaise, les offsets et les gains au niveau des super-pixels sont estimés très précisément. Ensuite lors du fonctionnement opérationnel de l'instrument, en vol, avant le traitement de chaque interférogramme issu d'une visée k, les coefficients d'égalisation au niveau des super-pixels sont estimés en utilisant les images issues du mode image de la même visée k.

Un séquencement judicieux, illustré par la figure 4, peut consister en un traitement des données issues d'une visée k-1, lors de l'acquisition de la visée k. Ainsi lors de la visée k, le calculateur bord dispose de toutes les entrées pour le traitement de la visée k-1, permettant d'éviter des problèmes de synchronisation entre acquisition et chaîne de calcul bord.

**Revendications**

1. Procédé de correction de réponse spatiale pour spectromètre à transformée de Fourier imageur ayant au moins un mode de fonctionnement dit mode interférométrique consistant à acquérir des interférogrammes, le mode interférométrique ayant une première résolution spatiale correspondant à la dimension d'un macro-pixel, un macro-pixel étant constitué de plusieurs pixels d'une matrice d'un détecteur placé dans un plan image, et un mode de fonctionnement dit mode image consistant à acquérir des images, le mode image ayant une deuxième résolution spatiale correspondant à la dimension d'un super-pixel, un super-pixel étant constitué d'au moins un pixel de la matrice du détecteur, le procédé comportant une étape préalable (201) de calcul des paramètres d'égalisation $(\hat{a}_i, \hat{b}_i)$ pour tous les super-pixels i comprenant un gain et un offset à partir de données acquises sur des scènes d'étalonnage (301), le procédé étant **caractérisé en ce qu'**il comprend au moins les étapes suivantes :

> • une étape de détermination (211) de coefficients d'égalisation à un niveau dit pseudo super-pixel déterminant les gains et offsets au niveau du macro-pixel $(\hat{\alpha}_k, \hat{\beta}_k)$ à partir d'une image acquise en mode image, et des gains et offsets déterminés à l'étape préalable (201),
> • une étape d'égalisation (231) au niveau pseudo super-pixel, appliquant les coefficients d'égalisation $(\hat{\alpha}_k, \hat{\beta}_k)$ à un macro-pixel (k) d'une acquisition $(I_k)$ en mode interférogramme du spectromètre imageur pour restituer un interférogramme égalisé $(I_{eq\_k})$.

2. Procédé de correction suivant la revendication 1, **caractérisé en ce que** les scènes d'étalonnage sont spatialement uniformes.

3. Procédé de correction suivant la revendication 1, **caractérisé en ce que** les scènes d'étalonnage sont des scènes de types respectivement corps noir (BB) et espace froid (CS).

4. Procédé de correction suivant l'une quelconque des revendications précédentes, **caractérisé en ce que** les coefficients d'égalisation $(\hat{\alpha}_k, \hat{\beta}_k)$ sont déterminés au moyen des relations suivantes :

$$\hat{\alpha}_k = \frac{\sum_{Superpixel\, i \in MacroPixel\, k} \left( \frac{M_i - \hat{b}_i}{\hat{a}_i} \right)}{\sum_{Superpixel\, i \in MacroPixel\, k} \left( M_i - \hat{b}_i \right)},$$

$$\hat{\beta}_k = \sum_{Superpixel\, i \in Macropixel\, k} \hat{b}_i,$$

dans lesquelles $M_i$ désigne un niveau de signal associé au super-pixel i.

5. Procédé de correction suivant l'une quelconque des revendications précédentes, **caractérisé en ce que** ladite étape préalable (201) est mise en oeuvre par des moyens disposés au sol, les étapes de détermination (211) et d'égalisation (231) étant mises en oeuvre dans des moyens embarqués.

6. Dispositif de correction de réponse spatiale pour spectromètre à transformée de Fourier imageur, **caractérisé en ce qu'**il est configuré pour la mise en oeuvre d'un procédé selon l'une quelconque des revendications précédentes.

**Patentansprüche**

1. Verfahren zur Korrektur der Raumantwort für Fourier-Transformations-Bildspektrometer mit mindestens einem Betriebsmodus, als interferometrischer Modus bezeichnet, der darin besteht, Interferogramme zu erfassen, wobei der interferometrische Modus eine erste Raumauflösung hat, die der Dimension eines Makropixels entspricht, wobei ein Makropixel aus mehreren Pixeln einer Matrix eines Detektors besteht, der in einer Bildebene platziert ist, und einem Betriebsmodus, als Bildmodus bezeichnet, der darin besteht, Bilder zu erfassen, wobei der Bildmodus eine zweite Raumauflösung hat, die der Dimension eines Superpixels entspricht, wobei ein Superpixel von mindestens einem Pixel der Matrix des Detektors gebildet ist, wobei das Verfahren einen vorherigen Berechnungsschritt (201) der Egalisienmgsparameter $(\hat{a}_i, \hat{b}_i)$ für alle Superpixel i aufweist, umfassend ein Gain und ein Offset, auf der Basis von auf Kalibrierungsszenen (301) gewonnenen Daten, wobei das Verfahren **dadurch gekennzeichnet ist, dass** es mindestens die folgenden Schritte umfasst:

• einen Bestimmungsschritt (211) von Egalisierungskoeffizienten auf einem so genannten Pseudo-Superpixel-Niveau, wobei die Gains und Offsets auf Ebene des Makropixels ($\hat{\alpha}_k$, $\hat{\beta}_k$) ausgehend von einem im Bildmodus erfassten Bild bestimmt werden, und von im vorhergehenden Schritt (201) bestimmten Gains und Offsets,
• einen Egalisierungsschritt (231) auf Pseudo-Superpixel-Niveau, bei dem die Egalisierungskoeffizienten ($\hat{a}_k$, $\hat{\beta}_k$) auf ein Makropixel (k) einer Erfassung ($I_k$) im Interferogrammmodus des Bildspektrometers angewendet werden, um ein egalisiertes Interferogramm ($I_{eq\_k}$) wiederzugeben.

2. Korrekturverfahren nach Anspruch 1, dadurch gekenntzeichnet, dass die Kalibrierungsszenen räumlich gleichförmig sind.

3. Korrekturverfahren nach Anspruch 1, **dadurch gekennzeichnet, dass** die Kalibrierungsszenen Szenen jeweiliger Typen Schwarzkörper (BB) und Kaltraum (CS) sind.

4. Korrekturverfahren nach einem der vorangehenden Ansprüche, **dadurch gekennzeichnet, dass** die Egalisierungs-koeffizienten ($\hat{\alpha}_k$, $\hat{\beta}_k$) mit Hilfe der folgenden Gleichungen bestimmt werden:

$$\hat{\alpha}_k = \frac{\sum\limits_{Superpixel\, i \in MacroPixel\, k} \left( \dfrac{\overline{M_i} - \hat{b}_i}{\hat{a}_i} \right)}{\sum\limits_{Superpixel\, i \in MacroPixel\, k} \left( M_i - \hat{b}_i \right)},$$

$$\hat{\beta}_k = \sum\limits_{Superpixel\, i \in Macropixel\, k} \hat{b}_i,$$

wobei $M_i$ ein dem Superpixel i zugeordnetes Signalniveau bezeichnet.

5. Korrekturverfahren nach einem der vorangehenden Ansprüche, **dadurch gekennzeichnet, dass** der vorherige Schritt (201) von auf dem Boden angeordneten Mittel durchgeführt wird, wobei der Bestimmungs- (211) und der Egalisierungsschritt (231) in On-Board-Mitteln durchgeführt wird.

6. Vorrichtung zur Korrektur einer Raumantwort für Fourier-Transformations-Spektrometer, **dadurch gekennzeichnet, dass** sie für die Durchführung eines Verfahrens nach einem der vorangehenden Ansprüche konfiguriert ist.

**Claims**

1. Correction process for a spatial response for an imaging Fourier transform spectrometer having at least one operating mode, called the interferometer mode, involving the acquisition of interferograms, the interferometer mode having a first spatial resolution which corresponds to the dimension of a macro-pixel, a macro-pixel being constituted by a plurality of pixels of a matrix of a detector which is placed in an image plane, and an operating mode which is called an image mode involving the acquisition of images, the image mode having a second spatial resolution corresponding to the dimension of a super-pixel, a super-pixel being constituted by at least one pixel of the matrix of the detector, the process comprising a previous step (201) of calculating the equalisation parameters ($\hat{a}_i$, $\hat{b}_i$) for all the super-pixels i, comprising a gain and an offset, from data acquired on calibration scenes (301), the process being **characterised in that** it comprises at least the following steps:

• a step (211) of determining equalisation coefficients at a so-called pseudo super-pixel level which determines the gains and offsets at the level of the macro-pixel ($\hat{\alpha}_k$, $\hat{\beta}_k$) from an image acquired in the image mode, and gains and offsets determined in the preceding step (201),
• a step (231) of equalisation at the pseudo super-pixel level, applying the equalisation coefficients ($\hat{\alpha}_k$, $\hat{\beta}_k$) to

a macro-pixel (k) of an acquisition ($I_k$) in the interferogram mode of the imaging spectrometer in order to re-constitute an equalised interferogram ($I_{eq\_k}$).

2. Correction process according to claim 1, **characterised in that** the calibration scenes are spatially uniform.

3. Correction process according to claim 1, **characterised in that** the calibration scenes are scenes of the black body (BB) and cold space (CS) types, respectively.

4. Correction process according to any one of the preceding claims, **characterised in that** the equalisation coefficients ($\hat{\alpha}_k$, $\hat{\beta}_k$) are determined by means of the following relationships:

$$\hat{\alpha}_k = \frac{\sum\limits_{Superpixel\, i \in MacroPixel k} \left( \frac{M_i - \hat{b}_i}{\hat{a}_i} \right)}{\sum\limits_{Superpixel\, i \in MacroPixel k} \left( M_i - \hat{b}_i \right)},$$

$$\hat{\beta}_k = \sum\limits_{Superpixel\, i \in Macropixel\, k} \hat{b}_i,$$

where $M_i$ designates a signal level associated with the super-pixel i.

5. Correction process according to any one of the preceding claims, **characterised in that** the preceding step (201) is carried out by means which are arranged on the ground, the determination step (211) and equalisation step (231) being carried out in on-board means.

6. Correction device for a spatial response for an imaging Fourier transform spectrometer, **characterised in that** it is configured for carrying out a process according to any one of the preceding claims.

FIG.1

FIG.2

301

311

X

Y

303

313a

313b

Binningégalisation

Binning

315b

315a

316

FIG.3

FIG.4

**RÉFÉRENCES CITÉES DANS LA DESCRIPTION**

**Documents brevets cités dans la description**

- US 20070075888 A